# EUROPÄISCHE PATENTSCHRIFT

(11) **EP 1 424 216 B1**
(45) Veröffentlichungstag und Bekanntmachung des Hinweises auf die Patenterteilung: **26.03.2008**
(21) Anmeldenummer: 02406026.1
(22) Anmeldetag: 26.11.2002
(51) Int. Cl.: B60B 11/02

(54) **Vorrichtung für eine lösbare Befestigung eines Zusatzrades an einem Rad eines Fahrzeugs**
Means for releasably fixing an auxiliary wheel to the wheel of a vehicle
Dispositif de fixation amovible pour une roue jumelable à une roue de véhicule

(43) Veröffentlichungstag der Anmeldung: 02.06.2004
(73) Patentinhaber: Gebr. Schaad AG Räderfabrik, 4553 Subingen (CH)
(72) Erfinder: Schaad, Rudolf, 4543 Deitingen (CH); Schaad, Fritz Johann, 4553 Subingen (CH)
(74) Vertreter: BOVARD AG

(56) Entgegenhaltungen:
- DE-B- 1 024 737
- DE-B- 1 296 030
- DE-C- 814 352
- DE-U- 8 434 085
- FR-A- 2 719 808

## Beschreibung

Die vorliegende Erfindung bezieht sich auf ein Befestigungsmittel für ein an einem Rad eines Fahrzeugs lösbar befestigbares Zusatzrad, umfassend ein am Zusatzrad angebrachtes Kupplungsteil mit darin gehaltenen Kupplungsgliedern und ein am Rad des Fahrzeugs angebrachtes Halteteil mit entsprechenden Aufnahmeteilen für die Kupplungsglieder, welche Kupplungsglieder im befestigten Zustand des Zusatzrades am Rad des Fahrzeugs, in welchem das Zusatzrad koaxial zum Rad des Fahrzeugs ausgerichtet ist, in den Aufnahmeteilen eingerastet und gehalten sind, wobei die Kupplungsglieder als Bolzen ausgebildet sind, die im wesentlichen parallel zur Radachse des Zusatzrades ausgerichtet sind und mit der Felge des Zusatzrades verbunden sind, und jeder Bolzen am dem der Felge abgewandten Endbereich eine kopfförmige Verdickung aufweist, und die am Halteteil angeordneten Aufnahmeteile schlitzförmige Ausnehmungen sind.

Insbesondere bei landwirtschaftlichen Fahrzeugen ist es vorteilhaft, wenn die Auflagefläche der Räder zum Bestellen von Feldern vergrössert werden kann, um die Bodenpressung geringer zu halten. Dies ist insbesondere dann vorteilhaft, wenn die Felder durchnässt sind. Diese Vergrösserung der Auflagefläche der Räder wird dadurch erreicht, dass jeweils ein zusätzliches Rad an den Rädern des Fahrzeugs befestigt wird.

Es sind Befestigungsvorrichtungen bekannt, mit welchen die Zusatzräder an den jeweiligen Rädern angebracht werden können. Diese bekannten Befestigungsvorrichtungen bestehen aus Zugstangen, deren eines Ende hakenförmig ausgebildet ist und jeweils in eine Ringschraube eingreift, welche über den Umfang verteilt am Rad des Fahrzeugs angebracht sind. Das andere Ende der jeweiligen Zugstange greift in einen spannbaren Haken ein, welcher in die Felge des zusätzlichen Rades einhängbar ist und welcher über einen Spannhebel festgespannt werden kann. Hierdurch wird das zusätzliche Rad gegen eine zwischen den beiden Rädern angebrachte Distanzhülse und mit dieser auf das Rad des Fahrzeuges gespannt.

Derartige Zusatzräder können auch an Kleinfahrzeugen angebracht werden, bei welchen diese Zusatzräder ohne weiteres durch eine Person getragen werden können. Zum Befestigen eines derartigen Zusatzrades am Rad eines Fahrzeugs sind die bekannten und vorgängig beschriebenen Vorrichtungen nicht geeignet, da deren Handhabung zu kompliziert ist.

Derartige Befestigungsmittel sind aus der DE-C 814 352 bekannt. Mit diesem dürfte es aber kaum möglich sein, das Zuatzrad am Rad eines Fahrzeuges praktisch spielfrei befestigen zu können.

Deshalb besteht die Aufgabe der vorliegenden Erfindung darin, Befestigungsmittel für ein an einem Rad eines Fahrzeugs lösbar befestigbares Zusatzrades zu schaffen, insbesondere für Kleinfahrzeuge, die einfach im Aufbau, die einfach in der Bedienung sind und mit welchen ein optimaler Sitz des Zusatzrades erreichbar ist.

Erfindungsgemäss erfolgt die Lösung dieser Aufgabe dadurch, dass die kopfförmige Verdickung der Bolzen haltenden Stege der schlitzförmigen Ausnehmungen jeweils eine Stegdicke aufweisen, die vom jeweiligen Einfahrbereich her gegen das dem Einfahrbereich abgewandte Ende hin zunehmend ist und die Abstützflächen der Stege für die kopfförmige Verdickung der Bolzen vom Einfahrbereich her ansteigend sind.

Mit derartigen Befestigungsmittel kann ein Zusatzrad mit wenigen einfachen Handgriffen durch eine Person am Rad eines kleinen Fahrzeugs, beispielsweise einem Quad, befestigt und wieder weggenommen werden, ohne dass zusätzliche Werkzeuge erforderlich sind.

In vorteilhafter Weise sind die Bolzen an einer Platte befestigt, die über eine Distanzhülse mit der Felge des Zusatzrades verbunden ist, wobei die schlitzförmigen Ausnehmungen in einer weiteren Platte angebracht sind, welche über Abstandhalter mit der Felge des Rades des Fahrzeugs verbunden sind, und die Platte und die weitere Platte im befestigten Zustand des Zusatzrades am Rad des Fahrzeugs aneinander anliegen. Dadurch wird eine optimale Halterung des Zusatzrades am Rad des Fahrzeuges erreicht.

Zum Einsetzen des Zusatzrades am Rad des Fahrzeugs ist genügend Spiel vorhanden und durch Bewegen des Zusatzrades bezüglich des Rades des Fahrzeugs wird optimaler Sitz erreicht.

In vorteilhafter Weise sind die mit den jeweiligen Bolzen zusammenwirkenden schlitzförmigen Ausnehmungen kreisbogenförmig und zentral symmetrisch um das Radachsenzentrum angeordnet, so dass der Befestigungszustand des Zusatzrades bezüglich des Rades des Fahrzeugs nach dem Einführen der Bolzen in die schlitzförmigen Ausnehmungen durch einfaches Verdrehen des Zusatzrades erreichbar ist.

In vorteilhafter Weise ist das Zusatzrad mit Führungs- und Zentriermitteln ausgestattet, die mit entsprechenden, am Rad des Fahrzeugs angebrachten Führungsflächen zusammenwirken und mittels welchen das Zusatzrad zum Befestigen am Rad des Fahrzeugs während des Verschiebens in achsialer Richtung geführt und zentrierbar ist. Dadurch wird das Aufsetzen des Zusatzrades auf das Rad des Fahrzeugs erleichtert.

Eine weitere vorteilhafte Ausgestaltung der Erfindung besteht darin, dass der Bolzenschaft des Bolzens und die kopfförmige Verdickung des Bolzens zylinderförmig sind, dass die Stirnfläche zwischen kopfförmiger Verdickung und Bolzenschaft kegelig geneigt ist, und dass die Abstützflächen der Stege entsprechend angeschrägt sind. Dies dient zusätzlich zur Erleichterung des Einführens des Zusatzrades am Rad des Fahrzeugs und bewirkt, dass das Zusatzrad am Rad des Fahrzeugs im befestigten Zustand spielfrei gehalten werden kann.

In vorteilhafter Weise bestehen die Verriegelungsmittel jeweils aus einem achsial verschiebbaren Verriegelungsbolzen, welcher in einer Führungsbüchse gelagert ist, welche Führungsbüchse an der am Zusatzrad angebrachten Platte angeordnet ist, derart, dass im befestigten Zustand des Zusatzrades am Rad des Fahrzeuges der Verriegelungsbolzen mit dem einen Endbereich in den entsprechenden Einfahrbereich der schlitzförmigen Ausnehmung einschiebbar ist und in diesem verriegelten Zustand ein Bewegen des Zusatzrades bezüglich des Rades des Fahrzeugs verunmöglicht wird. Dadurch wird eine optimale Verriegelung erreicht, ohne dass zusätzliche Öffnungen an der Platte des Rades des Fahrzeugs angebracht werden müssen.

In vorteilhafter Weise ist der in den Einfahrbereich einschiebbare Endbereich des Verriegelungsbolzens konisch ausgebildet und der Einfahrbereich der schlitzförmigen Ausnehmung entsprechend konisch geformt. Dadurch wird eine spielfreie Verriegelung erreicht.

Eine weitere vorteilhafte Ausgestaltung der Erfindung besteht darin, dass der andere Endbereich des Verriegelungsbolzens über die Führungsbüchse vorsteht und an diesem vorstehenden Bereich ein Querbolzen befestigt ist, durch welchen der Verriegelungsbolzen verdrehbar ist, und dass dieser Querbolzen auf am Oberrand der Führungsbüchse angebrachten Backen abgestützt ist, welche Backen in Drehrichtung des Verriegelungsbolzens eine Steigung aufweisen. Mit dieser Ausgestaltung kann ein Herausziehen des Verriegelungsbolzen aus der entsprechenden Öffnung ohne grossen Kraftaufwand erreicht werden.

In vorteilhafter Weise ist in der Führungsbüchse ein Federelement angeordnet, mittels welchem der Verriegelungsbolzen in Richtung verriegelter Zustand drückbar ist. Dadurch kann ein selbsttätiges Einrasten des Verriegelungsbolzens in die entsprechende Öffnung im montierten Zustand des Zusatzrades am Rad des Fahrzeuges erreicht werden, was die Bedienung zusätzlich erleichtert.

Eine Ausführungsform der vorliegenden Erfindung wird nachfolgend anhand der beiliegenden Zeichnung beispielhaft näher erläutert.

Es zeigt
Fig. 1 eine Schnittdarstellung durch ein Rad eines Fahrzeugs mit aufgesetztem und befestigtem Zusatzrad;
Fig. 2 eine Draufsicht auf die Befestigungsmittel des Zusatzrades in befestigtem Zustand am Rad des Fahrzeugs, ohne Felge und Reifen der entsprechenden Räder;
Fig. 3 bis 6 Detailansichten eines Bolzens im Zusammenspiel mit der jeweiligen schlitzförmigen Ausnehmung;
Fig. 7 in einer Schnittdarstellung ein Verriegelungsmittel bei aufgesetztem und verriegeltem Zustand des Zusatzrades auf dem Rad des Fahrzeugs;
Fig. 8 bis 10 Ansichten der Führungsbüchse, die an der Platte des Zusatzrades angeordnet ist, und in welcher der Verriegelungsbolzen einsetzbar ist.

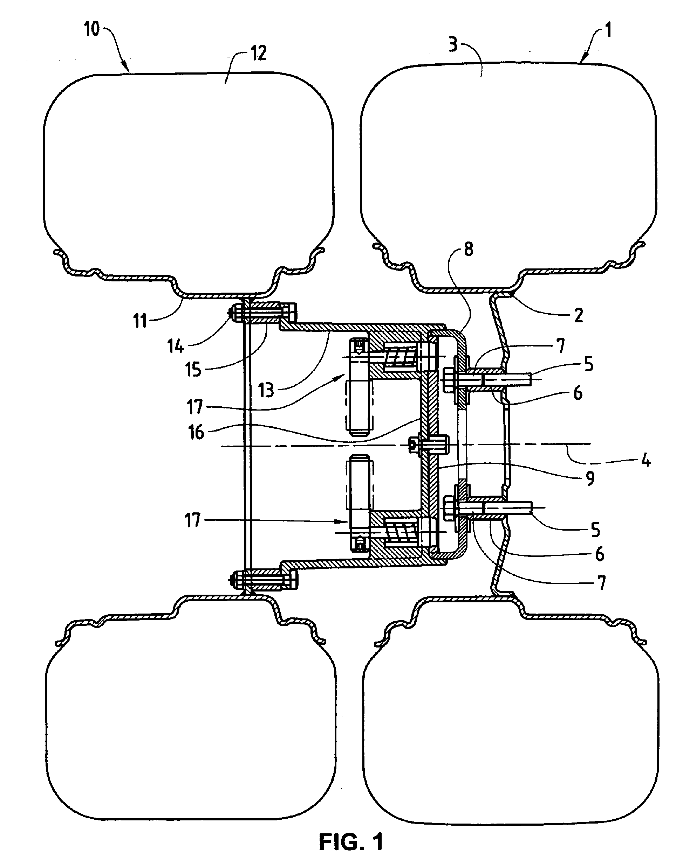

In Fig. 1 ist ein Rad 1 eines nicht dargestellten Fahrzeugs im Schnitt dargestellt. Dieses Rad 1 umfasst in bekannter Weise eine Felge 2, auf welcher ein mit Luft gefüllter Reifen 3 gehalten ist. Dieses Rad 1 ist in bekannter Weise an der Radachse 4 (schematisch dargestellt) des Fahrzeugs befestigt.

Auf die Radschrauben 5, die an der Radachse 4 befestigt sind, sind Muttern 6 aufgeschraubt, mit welchen das Rad 1 an der Radachse 4 des Fahrzeuges befestigt wird. Diese Muttern 6 weisen eine grössere Länge auf, so dass jeweils nochmals eine Schraube 7 eingeschraubt werden kann. Mit diesen Schrauben 7 wird ein Teller 8 am Rad 1 befestigt, auf welchem Teller 8 eine weitere Platte 9 aufgeschraubt ist, die senkrecht zur Radachse 4 ausgerichtet ist.

Durch die Verwendung von Muttern 6, die eine grössere Länge aufweisen, wird erreicht, dass der Teller 8 von der Felge 2 des Rades 1 beabstandet befestigt wird, wodurch erreicht wird, dass derartige Teller 8 auch verwendet werden können, wenn die Felge 2 mit Ausbuchtungen und Rippen versehen ist, um diese zu verstärken.

Auf dieses Rad 1 des Fahrzeugs ist ein Zusatzrad 10 aufsetzbar. Dieses Zusatzrad 10 umfasst ebenfalls eine Felge 11, auf welcher ebenfalls ein Reifen 12 aufgesetzt ist. Auf die Felge 11 mittels Schrauben 14 aufgeschraubt ist eine Distanzhülse 13. Zwischen diese Distanzhülse 13 und die Felge 11 können auf den Schrauben 14 Distanzbüchsen 15 aufgesteckt werden, wodurch bei Verwendung der jeweils gleichen Distanzhülse 13 mit eine andere Länge aufweisenden Distanzbüchsen 15 der Abstand des Zusatzrades 10 vom Rad 1 eingestellt werden kann.

An der Distanzhülse 13 ist eine Platte 16 angebracht, die senkrecht zur Radachse 4 ausgerichtet ist, wobei bei aufgesetztem Zusatzrad 10 auf das Rad 1 des Fahrzeugs diese Platte 16 und die weitere Platte 9 aneinander anliegen.

Wie später noch beschrieben wird, sind an der Patte 16 Kupplungsglieder angebracht, die in der weiteren Platte 9 des Rades 1 gehalten werden können. Ferner sind in dieser Darstellung Verriegelungsmittel 17 ersichtlich, die ebenfalls im Detail später noch beschrieben werden.

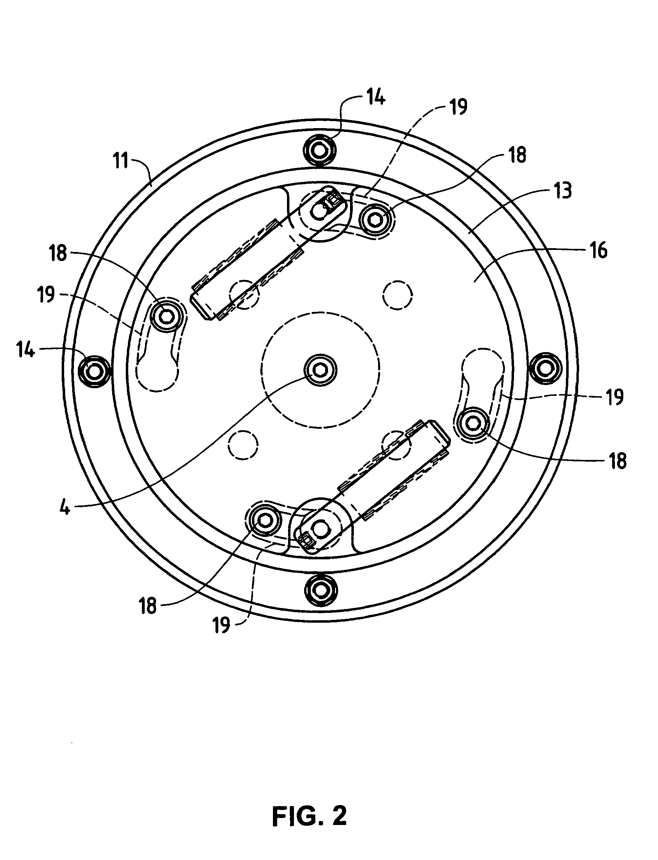

Fig. 2 zeigt eine Draufsicht auf die Distanzhülse 13 und die Platte 16, welche über die Schrauben 14 mit der Felge 11 verbunden sind. In der Platte 16 sind Bolzen 18 befestigt, deren Achsen parallel zur Radachse 4 ausgerichtet sind. Diese Bolzen 18 sind im Zustand, wo das Zusatzrad am Rad des Fahrzeugs befestigt ist, wie dies in Fig. 2 dargestellt ist, in schlitzförmige Ausnehmungen 19 eingeführt und werden dort gehalten, wie später im Detail noch beschrieben wird. Diese schlitzförmigen Ausnehmungen 19 sind in der weiteren Platte 9 angebracht, die durch die Platte 16 in Fig. 2 verdeckt ist.

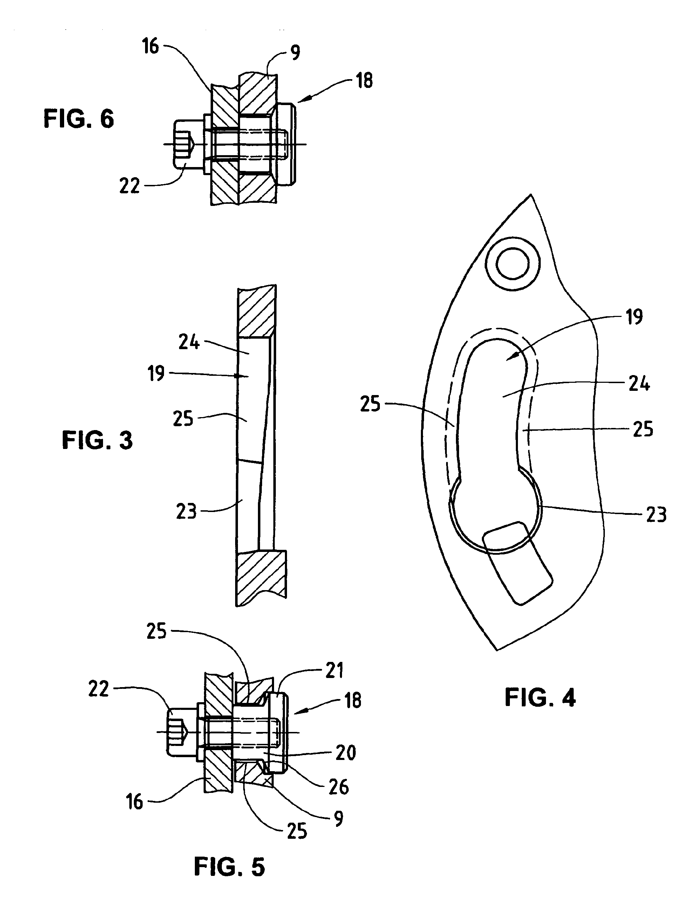

Die Ausgestaltung der Bolzen 18, die an der Platte 16 befestigt sind und das Zusammenwirken mit den schlitzförmigen Ausnehmungen 19, angebracht in der weiteren Platte 9 des Rades des Fahrzeugs sind in den Fig. 3 bis 6 dargestellt. Jeder der Bolzen 18 umfasst einen zylinderförmigen Bolzenschaft 20, an welchem eine kopfförmige Verdickung 21 angeformt ist, die ebenfalls zylinderförmig ausgebildet ist. Der Bolzenschaft 20 und die kopfförmige Verdickung 21 sind über eine Schraube 22 an der Platte 16 des Zusatzrades befestigt, wie dies in den Fig. 5 und 6 ersichtlich ist.

An der weiteren Platte 9, die mit dem Rad des Fahrzeugs verbunden ist, sind die schlitzförmigen Ausnehmungen 19 angebracht. Eine dieser schlitzförmigen Ausnehmungen 19 ist in den Fig. 3 und 4 dargestellt. Diese schlitzförmige Ausnehmung 19 weist am einen Endbereich einen Einfahrbereich 23 auf, der so gross ist, dass die kopfförmige Verdickung 21 des Bolzens 18 in den Einfahrbereich eingefahren werden kann. Vom Einfahrbereich 23 her ist die schlitzförmige Ausnehmung 19 als Haltebereich 24 ausgebildet, die mit seitlich verlaufenden Stegen 25 versehen ist. Wie aus Fig. 3 ersichtlich ist, weisen diese Stege 25 eine Stegdicke auf, die vom Einfahrbereich 23 her gegen das Ende des Haltebereichs 24 hin zunehmend ist.

Fig. 5 zeigt die Situation beim Befestigen des Zusatzrades am Rad des Fahrzeugs, bei welchem der jeweilige Bolzen 18 durch den Einführbereich 23 der schlitzförmigen Ausnehmung 19 eingeführt ist. Da in diesem Bereich die Dicke der Stege 25 geringer ist, hat man zwischen der Stirnfläche 26, die zwischen der kopfförmigen Verdickung 21 und dem Bolzenschaft 20 gebildet ist, und die kegelig geneigt ist, mit den Abstützflächen, die ebenfalls entsprechend geneigt sind, der Stege 25 Spiel. Von dieser eingefahrenen Stellung kann durch Bewegen des Zusatzrades bezüglich des Rades des Fahrzeuges der Bolzen 18 entlang der schlitzförmigen Ausnehmung 19 in den Haltebereich 24 am Ende der schlitzförmigen Ausnehmung 19 gebracht werden. Da hier die Stegdicke der Stege 25 grösser ist, besteht zwischen der Platte 16 des Zusatzrades und der weiteren Platte 9 des Rades des Fahrzeugs kein Spiel mehr, die Platte 16 liegt an der weiteren Platte 9 somit spielfrei an.

Die schlitzförmigen Ausnehmungen 19 mit den Stegen 25 sind so angeordnet, dass sich das Zusatzrad bezüglich des Rades am Fahrzeug beim Vorwärtsfahren des Fahrzeugs zusätzlich verspannt.

Die Stirnfläche 26 der Bolzen 18 und die Abstützflächen der Stege 25 sind kegelig bzw. geneigt ausgebildet, wodurch neben dem Erleichtern des Einfahrens und Verschiebens in den befestigten Zustand ein besserer Sitz des Bolzens ohne Achsialspiel bezüglich der Abstützflächen der Stege erreicht wird.

Wie aus Fig. 2 und Fig. 4 entnehmbar ist, sind die schlitzförmigen Ausnehmungen 19 kreisbogenförmig und zentral symmetrisch um das Radachsenzentrum 4 angeordnet. Somit kann das Zusatzrad zum Befestigen am Rad des Fahrzeugs in achsialer Richtung aufgesetzt werden, wobei die Bolzen 18 in die Einfahrbereiche 23 der schlitzförmigen Ausnehmungen 19 eingeführt werden, danach kann das Rad verdreht werden und die Bolzen können in den Haltebereich 24 der schlitzförmigen Ausnehmungen 19 eingefahren werden, wo sie, wie vorgängig beschrieben wurde, gehalten werden. Über die Verriegelungseinrichtungen 17 wird das Rad in dieser Position gehalten, wie nachfolgend noch beschrieben wird.

Beim hier dargestellten Ausführungsbeispiel sind am Rad des Fahrzeugs vier schlitzförmige Ausnehmungen 19 über den Umfang verteilt angeordnet, während am Zusatzrad entsprechend vier Bolzen 18 vorgesehen sind. Selbstverständlich wäre es denkbar, auch eine andere Anzahl von schlitzförmigen Ausnehmungen und Bolzen zu wählen, abhängig von der Grösse der Räder, wobei vorteilhafterweise im Minimum zwei schlitzförmige Ausnehmungen mit entsprechend zwei Bolzen vorgesehen sein müssen.

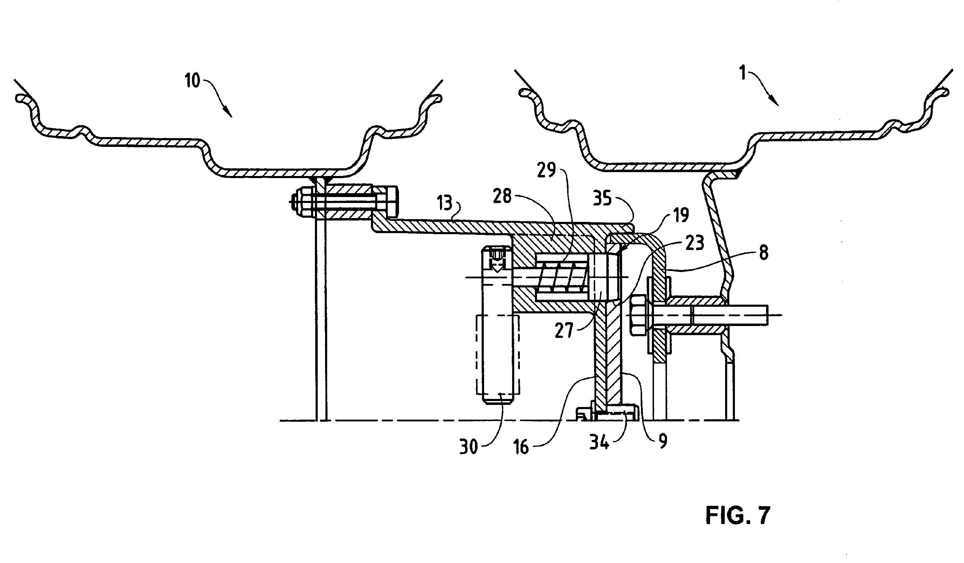

In Fig. 7 ist eine Verriegelungseinrichtung 17 dargestellt. Diese Verriegelungseinrichtung 17 besteht aus einem achsial verschiebbaren Verriegelungsbolzen 27, welcher in einer Führungsbüchse 28 gelagert ist, die an der am Zusatzrad 10 angebrachten Platte 16 und an der Distanzhülse 13 befestigt ist. Dieser Verriegelungsbolzen 27 umfasst ein Federelement 29, mittels welchem der Verriegelungsbolzen 27 in Richtung verriegelter Zustand drückbar ist, wie dieser in Fig. 7 dargestellt ist.

Die Verriegelungsbolzen 27 sind so angeordnet, wie dies auch aus Fig. 2 ersichtlich ist, dass im befestigten Zustand des Zusatzrades 10 am Rad 1 des Fahrzeuges, in welchem die Bolzen 18 in den Haltebereichen 24 der schlitzförmigen Ausnehmungen 19 sind (Fig. 4 und Fig. 6), die Verriegelungsbolzen 27 im verriegelten Zustand in den Einfahrbereich 23 der schlitzförmigen Ausnehmung 19 hineinragen. Um das Einfahren des Verriegelungsbolzens 27 in den verriegelten Zustand zu erleichtern, ist der Endbereich des Verriegelungsbolzens 27 konisch ausgebildet. Entsprechend ist der aufnehmende Einfahrbereich 23 der schlitzförmigen Ausnehmung 19 geformt. Dadurch erreicht man auch einen optimalen Sitz des Verriegelungsbolzens 27 in der schlitzförmigen Ausnehmung im verriegelten Zustand.

Der andere Endbereich des Verriegelungsbolzens 27 steht über die Führungsbüchse 28 vor. An diesem vorstehenden Bereich ist ein Querbolzen 30 befestigt. Durch diesen Querbolzen 30 ist der Verriegelungsbolzen 27 verdrehbar.

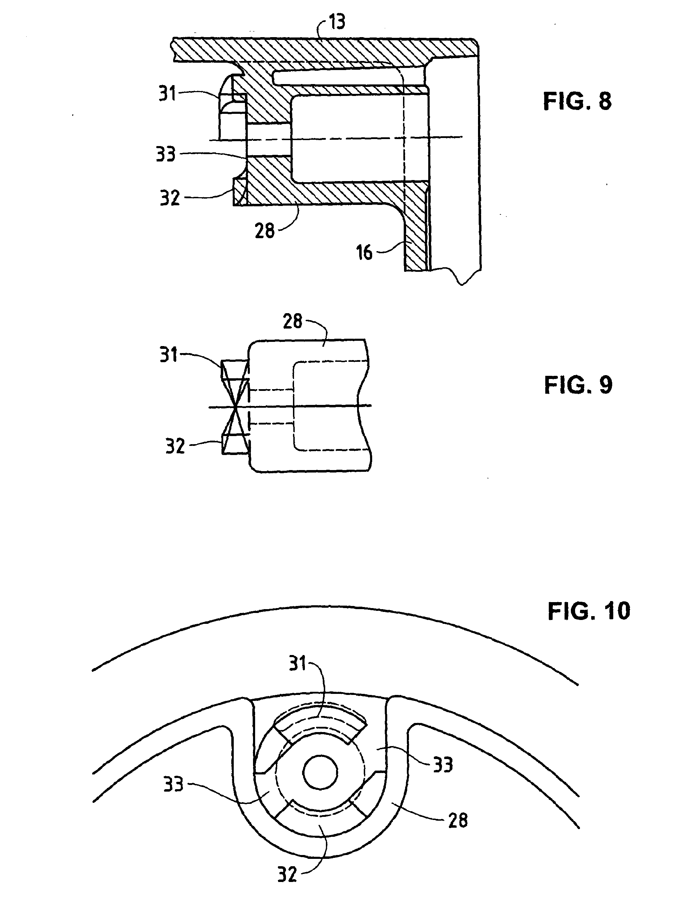

Wie aus den Fig. 8 bis 10 ersichtlich ist, sind am Oberrand der Führungsbüchse 28 zwei Backen 31, 32 angebracht, auf welchen sich der Querbolzen 30 abstützt. Die Backen 31 und 32 weisen in Drehrichtung des Verriegelungsbolzens 27 eine Steigung auf. Im verriegelten Zustand liegt der Querbolzen 30 zwischen den beiden Backen 31 und 32 in einem von diesen freigegebenen Raum 33 (Fig. 10). Der Verriegelungsbolzen findet sich hierbei im verriegelten Zustand, wie dies in Fig. 7 dargestellt ist. Zum Herausziehen des Verriegelungsbolzens 27 aus dem Einfahrbereich 23 der schlitzförmigen Ausnehmung 19 (Fig. 7) kann der Querbolzen verdreht werden, durch die die Steigung aufweisenden Backen 31 und 32, durch welche der Querbolzen 30 abgestützt ist, wird der Verriegelungsbolzen 27 aus dem Einfahrbereich 23 der schlitzförmigen Ausnehmung 19 herausgezogen und gibt das Zusatzrad 10 zum Verdrehen frei.

Wie bereits erwähnt worden ist, sind die schlitzförmigen Ausnehmungen 19, die an der weiteren Platte 9 des Rades 1 des Fahrzeugs angebracht sind, bezüglich des Radachsenzentrums kreisbogenförmig und zentralsymmetrisch angeordnet. Dies ermöglicht, dass das Zusatzrad 10 in achsialer Richtung auf das Rad 1 des Fahrzeugs aufgesetzt werden kann und zum Befestigen um die Radachse verdreht werden kann, bis die Verriegelungsbolzen in die entsprechenden Öffnungen einrasten. Um das Aufsetzen des Zusatzrades 10 auf das Rad 1 des Fahrzeugs zu erleichtern, ist, wie aus Fig. 7 ersichtlich ist, an der Platte 16 des Zusatzrades ein zentraler Führungsstift 34 angeordnet, der in eine entsprechende Öffnung an der weiteren Platte 9 des Rades 1 des Fahrzeuges geführt einschiebbar ist. Die Distanzhülse 13 des Zusatzrades 10 kann über dem gesamten Umfang oder nur Gebietsweise mit jeweils einem Vorsprung 35 ausgestattet sein, der über den äusseren Umfang des Tellers 8 des Rades 1 des Fahrzeugs geschoben werden kann, was eine zusätzliche Führungshilfe und eine Erleichterung zum Montieren des Zusatzrades 10 am Rad 1 des Fahrzeugs ergibt.

Im vorliegenden Ausführungsbeispiel sind im Zusatzrad zwei Verriegelungseinrichtungen vorgesehen. Selbstverständlich kann aber auch eine andere Anzahl gewählt werden, abhängig von der Grösse der Räder und abhängig von der Anzahl der schlitzförmigen Ausnehmung. Mindestens eine Verriegelungseinrichtung ist in jedem Fall erforderlich.

Mit dieser erfindungsgemässen Ausgestaltung der Befestigungsmittel lässt sich das Zusatzrad in einfachster Weise am Rad eines Fahrzeugs befestigen. Der Querbolzen 30 kann in eine Position gebracht werden, dass der Verriegelungsbolzen 27 durch das Federelement 29 selbsttätig in die verriegelte Position gebracht wird. Zum Entfernen des Zusatzrades müssen die Querbolzen 30 gedreht werden, das Zusatzrad kann dann bezüglich des Rades des Fahrzeugs seinerseits verdreht werden, bis die Bolzen 18 durch die Einfahrbereiche 23 herausgefahren werden können.

Zum Mitführen der Zusatzräder kann am Fahrzeug ein Gestell angebracht werden, an welchem jeweils z.B. zwei Platten befestigt sind, die jeweils der weiteren Platte 9 des Rades des Fahrzeugs entsprechen. In jeder dieser Platte sind die entsprechenden schlitzförmigen Ausnehmungen angebracht, die Zusatzräder können dann in einfacher Weise auf dieser Haltevorrichtung befestigt werden und stehen jederzeit für die Verwendung zur Verfügung.

## Patentansprüche

1. Befestigungsmittel für ein an einem Rad (1) eines Fahrzeugs lösbar befestigbares Zusatzrad (10), umfassend ein am Zusatzrad (10) angebrachtes Kupplungsteil mit darin gehaltenen Kupplungsgliedern (18) und ein am Rad (1) des Fahrzeugs angebrachtes Halteteil mit entsprechenden Aufnahmeteilen (19) für die Kupplungsglieder (18), welche Kupplungsglieder (18) im befestigten Zustand des Zusatzrades (10) am Rad (1) des Fahrzeugs, in welchem das Zusatzrad (10) koaxial zum Rad (1) des Fahrzeugs ausgerichtet ist, in den Aufnahmeteilen (19) eingerastet und gehalten sind, wobei die Kupplungsglieder als Bolzen (18) ausgebildet sind, die im wesentlichen parallel zur Radachse (4) des Zusatzrades (10) ausgerichtet sind und mit der Felge (11) des Zusatzrades (10) verbunden sind, und jeder Bolzen (18) am dem der Felge (11) abgewandten Endbereich eine kopfförmige Verdickung (21) aufweist, und die am Halteteil angeordneten Aufnahmeteile schlitzförmige Ausnehmungen (19) sind, welche einen Einfahrbereich (23), in welchen die kopfförmigen Verdickungen (21) der jeweiligen Bolzen (18) durch Verschieben des Zusatzrades (10) in Radachsenrichtung einfahrbar sind, und einen Haltebereich (24) mit Stegen (25) aufweisen, in welchen die kopfförmigen Verdickungen (21) der Bolzen (18) durch Bewegen des Zusatzrades (10) im wesentlichen in einer senkrecht zur Radachse (4) stehenden Ebene einschiebbar, auf den Stegen (25) abstützbar und durch Verriegelungsmittel (17) in dieser Position haltbar sind, **dadurch gekennzeichnet, dass** die die kopfförmige Verdickung (21) der Bolzen (18) haltenden Stege (25) der schlitzförmigen Ausnehmungen (19) jeweils eine Stegdicke aufweisen, die vom jeweiligen Einfahrbereich (23) her gegen das dem Einfahrbereich (23) abgewandte Ende hin zunehmend ist und die Abstützflächen der Stege (25) für die kopfförmige Verdickung (21) der Bolzen (18) vom Einfahrbereich (23) her ansteigend sind.

2. Befestigungsmittel nach Anspruch 1, **dadurch gekennzeichnet, dass** die Bolzen (18) an einer Platte (16) befestigt sind, die über eine Distanzhülse (13) mit der Felge (11) des Zusatzrades (10) verbunden ist, dass die schlitzförmigen Ausnehmungen (19) in einer weiteren Platte (9) angebracht sind, welche über Abstandhalter mit der Felge (2) des Rades (1) des Fahrzeugs verbunden sind, und dass die Platte (16) und die weitere Platte (9) im befestigten Zustand des Zusatzrades (10) am Rad (1) des Fahrzeugs aneinander anliegen.

3. Befestigungsmittel nach Anspruch 1 oder 2, **dadurch gekennzeichnet, dass** die mit den jeweiligen Bolzen (18) zusammenwirkenden schlitzförmigen Ausnehmungen (19) kreisbogenförmig und zentralsymmetrisch um das Radachsenzentrum (4) angeordnet sind.

4. Befestigungsmittel nach Anspruch 3, **dadurch gekennzeichnet, dass** das Zusatzrad (10) mit Führungs- und Zentriermitteln (33, 34) ausgestattet ist, die mit entsprechenden, am Rad (1) des Fahrzeugs angebrachten Führungsflächen zusammenwirken und mittels welchen das Zusatzrad (10) zum Befestigen am Rad (1) des Fahrzeugs während des Verschiebens in achsialer Richtung geführt und zentrierbar ist.

5. Befestigungsmittel nach einem der Ansprüche 1 bis 4, **dadurch gekennzeichnet, dass** der Bolzenschaft (20) des Bolzens (18) und die kopfförmige Verdickung (21) des Bolzens (18) zylinderförmig sind, dass die Stirnfläche (26) zwischen kopfförmiger Verdickung (21) und Bolzenschaft (20) kegelig geneigt ist, und dass die Abstützflächen der Stege (25) entsprechend angeschrägt sind.

6. Befestigungsmittel nach einem der Ansprüche 1 bis 5, **dadurch gekennzeichnet, dass** die Verriegelungsmittel (17) jeweils aus einem achsial verschiebbaren Verriegelungsbolzen (27) bestehen, welcher in einer Führungsbüchse (28) gelagert ist, welche Führungsbüchse (28) an der am Zusatzrad (10) angebrachten Platte (16) angeordnet ist, derart, dass im befestigten Zustand des Zusatzrades (10) am Rad (1) des Fahrzeugs der Verriegelungsbolzen (27) mit dem einen Endbereich in den entsprechenden Einfahrbereich (23) der schlitzförmigen Ausnehmung (19) einschiebbar ist und in diesem verriegelten Zustand ein Bewegen des Zusatzrades (10) bezüglich des Rades (1) des Fahrzeugs verunmöglicht.

7. Befestigungsmittel nach Anspruch 6, **dadurch gekennzeichnet, dass** der in den Einfahrbereich (23) einschiebbare Endbereich des Verriegelungsbolzens (27) konisch ausgebildet ist und der Einfahrbereich (23) der schlitzförmigen Ausnehmung (19) entsprechend konisch geformt ist.

8. Befestigungsmittel nach Anspruch 6 oder 7, **dadurch gekennzeichnet, dass** der andere Endbereich des Verriegelungsbolzens (27) über die Führungsbüchse (28) vorsteht und an diesem vorstehenden Bereich ein Querbolzen (30) befestigt ist, durch welchen der Verriegelungsbolzen (27) verdrehbar ist, und dass dieser Querbolzen (30) auf am Oberrand der Führungsbüchse (28) angebrachten Backen (31, 32) abgestützt ist, welche Backen (31, 32) in Drehrichtung des Verriegelungsbolzens (27) eine Steigung aufweisen.

9. Befestigungsmittel nach einem der Ansprüche 6 bis 8, **dadurch gekennzeichnet, dass** in der Führungsbüchse (28) ein Federelement (29) angeordnet ist, mittels welchem der Verriegelungsbolzen (27) in Richtung verriegelter Zustand drückbar ist.

## Claims

1. Attachment means for an auxiliary wheel (10), releasably attachable to a wheel (1) of a vehicle, comprising a coupling part, provided on the auxiliary wheel (10), with coupling members (18) held therein, and a holding part, provided on the wheel (1) of the vehicle, with corresponding receiving parts (19) for the coupling members (18), which coupling members (18) are engaged and held in the receiving parts (19) in the state of the auxiliary wheel (10) being attached to the wheel (1) of the vehicle, in which state the auxiliary wheel (10) is aligned coaxially to the wheel (1) of the vehicle, the coupling members being designed as bolts (18), which are aligned substantially parallel to the wheel axle (4) of the auxiliary wheel (10) and are connected to the wheel rim (11) of the auxiliary wheel (10), and each bolt (18) having a head-shaped swelling (21) on the end region remote from the wheel rim (11), and the receiving parts disposed on the holding part being slot-shaped recesses (19) having an insertion zone (23), into which zone the head-shaped swellings (21) of the respective bolts (18) are insertable through displacement of the auxiliary wheel (10) in wheel axle direction, and a retaining zone (24), with protruding pieces (25), into which zone the head-shaped swellings (21) of the bolts (18) are pushable through movement of the auxiliary wheel (10) in a plane running substantially perpendicular to the wheel axle (4), are supportable on the protruding pieces (25) and are maintainable in this position through locking means (17), **characterised in that** the protruding pieces (25), holding the head-shaped swelling (21) of the bolts (18), of the slot-shaped recesses (19) each have a protruding piece thickness which is increasing from the respective insertion zone (23) toward the end remote from the insertion zone (23), and the support surfaces of the protruding pieces (25) for the head-shaped swelling (21) of the bolts (18) are increasing from the insertion zone (23).

2. Attachment means according to claim 1, **characterised in that** the bolts (18) are fixed to a plate (16) which is connected to the wheel rim (11) of the auxiliary wheel (10) via a spacer sleeve (13), **in that** the slot-shaped recesses (19) are made in a further plate (9) which is connected to the wheel rim (2) of the wheel (1) of the vehicle via spacers, and **in that** the plate (16) and the further plate (9) abut one another in the state of the auxiliary wheel (10) being attached to the wheel (1) of the vehicle.

3. Attachment means according to claim 1 or 2, **characterised in that** the slot-shaped recesses (19) co-operating with the respective bolts (18) are disposed circularly and centrosymmetrically about the wheel axle centre (4).

4. Attachment means according to claim 3, **characterised in that** the auxiliary wheel (10) is provided with guide and centring means (33, 34) which co-operate with corresponding guide surfaces provided on the wheel (1) of the vehicle and by means of which the auxiliary wheel (10) is led in axial direction and is able to be centred during the displacement, for attaching to the wheel (1) of the vehicle.

5. Attachment means according to one of the claims 1 to 4, **characterised in that** the bolt shank (20) of the bolt (18) and the head-shaped swelling (21) of the bolt (18) are cylindrical, **in that** the face (26) between head-shaped swelling (21) and bolt shank (20) is conically inclined, and **in that** the support - surfaces of the protruding pieces (25) are correspondingly bevelled.

6. Attachment means according to one of the claims 1 to 5, **characterised in that** the locking means (17) each comprise an axially displaceable locking bolt (27) which is borne in a guide bush (28), which guide bush (28) is disposed on the plate (16) provided on the auxiliary wheel (10) in such a way that in the state of the auxiliary wheel (10) being attached to the wheel (1) of the vehicle the locking bolt (27) is insertable with the one end region in the corresponding insertion zone (23) of the slot-shaped recess (19), and makes impossible a movement of the auxiliary wheel (10) with respect to the wheel (1) of the vehicle in this locked state.

7. Attachment means according to claim 6, **characterised in that** the end region of the locking bolt (27) insertable into the insertion zone (23) is of conical design, and the insertion zone (23) of the slot-shaped recess (19) is correspondingly conically shaped.

8. Attachment means according to claim 6 or 7, **characterised in that** the other end region of the locking bolt (27) protrudes beyond the guide bush (28), and a cross bolt (30) is fixed on this protruding area, by means of which the locking bolt (27) is rotatable, and **in that** this cross bolt (30) is supported on cheeks (31, 32) provided on the upper edge of the guide bush (28), which cheeks have an incline in the rotational direction of the locking bolt (27).

9. Attachment means according to one of the claims 6 to 8, **characterised in that** disposed in the guide bush (28) is a spring element (29) by means of which the locking bolt (27) is pushable in the direction of the locked state.

## Revendications

1. Moyen de fixation pour une roue supplémentaire (10) fixable sur une roue (1) d'un véhicule, comprenant une partie d'accouplement aménagée sur la roue supplémentaire (10) avec des organes d'accouplement (18) maintenus à l'intérieur de cette dernière et une partie de retenue aménagée sur la roue (1) du véhicule avec des parties de logement (19) pour les organes d'accouplement (18), organes d'accouplement (18) qui s'encliquètent et sont maintenus dans les parties de logement (19) quand la roue supplémentaire (10) est à l'état monté sur la roue (1) du véhicule, dans lequel la roue supplémentaire (10) est orientée coaxialement à la roue (1) du véhicule, les organes d'accouplement étant réalisés comme des boulons (18) qui sont orientés sensiblement parallèlement à l'essieu de roue (4) de la roue supplémentaire (10) et qui sont reliés à la jante (11) de la roue supplémentaire (10), et chaque boulon (18) présentant sur la zone d'extrémité détournée de la jante (11) une épaisseur en forme de tête (21) et les parties de logement disposées sur la partie de retenue sont des évidements en forme de fente (19) qui présentent une zone d'introduction (23) dans laquelle les épaisseurs en forme de tête (21) des boulons (18) peuvent être introduites par déplacement de la roue supplémentaire (10) dans le sens d'essieu de roue et une zone de retenue (24) munie de brides (25) dans lesquelles les épaisseurs en forme de tête (21) des boulons (18) peuvent être introduites par déplacement de la roue supplémentaire (10) essentiellement dans un plan perpendiculaire à l'essieu de roue (4), peuvent prendre appui sur les brides (25) et peuvent être maintenues dans cette position par des moyens de verrouillage (17), **caractérisé en ce que** les brides (25) des évidements en forme de fente (19), maintenant l'épaisseur en forme de tête (21) des boulons (18) présente respectivement une épaisseur de bride qui augmente depuis la zone d'introduction respective (23) en direction de l'extrémité détournée de la zone d'introduction (23) et les surfaces d'appui des brides (25) augmentant depuis la zone d'introduction (23) pour l'épaisseur en forme de tête (21) des boulons (18).

2. Moyen de fixation selon la revendication 1, **caractérisé en ce que** les boulons (18) sont fixés sur une plaque (16) qui est reliée par une douille d'écartement (13) à la jante (11) de la roue supplémentaire (10), **en ce que** les évidements en forme de fente (19) sont aménagés sur une autre plaque (9) et sont reliés par des écarteurs à la jante(2) de la roue (1) du véhicule et **en ce que** la plaque (16) et l'autre plaque (9) s'appliquent l'une contre l'autre dans l'état fixé de la roue supplémentaire (10) sur la roue (1) du véhicule.

3. Moyen de fixation selon la revendication 1 ou 2, **caractérisé en ce que** les évidements en forme de fente (19) coopérant avec les boulons respectifs (18) sont disposés en forme d'arc de cercle et symétriquement central autour du centre d'essieu de roue (4).

4. Moyen de fixation selon la revendication 3, **caractérisé en ce que** la roue supplémentaire (10) est munie de moyens de guidage et de centrage (33, 34) qui coopèrent avec des surfaces de guidage correspondantes aménagées sur la roue (1) du véhicule et au moyen desquels la roue supplémentaire (10) peut être guidée et centrée pendant le déplacement dans le sens axial pour la fixation sur la roue (1) du véhicule.

5. Moyen de fixation selon l'une des revendications 1 à 4, **caractérisé en ce que** la tige de boulon (20) du boulon (18) et l'épaisseur en forme de tête (21) du boulon (18) sont de forme cylindrique, **en ce que** la surface frontale (26) est inclinée de manière conique entre l'épaisseur en forme de tête (21) et la tige de boulon (20) et **en ce que** les surfaces d'appui des brides (25) sont biseautées en conséquence.

6. Moyen de fixation selon l'une des revendications 1 à 5, **caractérisé en ce que** les moyens de verrouillage (17) se composent d'un boulon de verrouillage (27) coulissant axialement qui est logé dans une douille de guidage (28), douille de guidage (28) qui est disposée sur la plaque (16) placée sur la roue supplémentaire (10), de sorte qu'à l'état monté de la roue supplémentaire (10) sur la roue (1) du véhicule, le boulon de verrouillage (27) est insérable par la zone d'extrémité dans la zone d'introduction correspondante (23) des évidements en forme de fente (19) et rend impossible dans cet état verrouillé un déplacement de la roue supplémentaire (10) par rapport à la roue (1) du véhicule.

7. Moyen de fixation selon la revendication 6, **caractérisé en ce que** la zone d'extrémité insérable dans la zone d'entrée (23) du boulon de verrouillage (27) et de forme conique et la zone d'entrée (23) de l'évidement en forme de fente (19) est de forme conique correspondante.

8. Moyen de fixation selon la revendication 6 ou 7, **caractérisé en ce que** l'autre zone d'extrémité du boulon de verrouillage (27) fait saillie au dessus de la douille de guidage (28) et un boulon transversal (30) est fixé sur cette zone saillante, qui permet de tourner le boulon de verrouillage (27) et **en ce que** ce boulon transversal (30) prend appui sur des mâchoires (31, 32) placées sur le bord supérieur de la douille de guidage (28), mâchoires (31, 32) qui présentent une inclinaison dans le sens de rotation du boulon de verrouillage (27).

9. Moyen de fixation selon l'une des revendications 6 à 8, **caractérisé en ce que** dans la douille de guidage (28) il est disposé un élément ressort (29) au moyen duquel le boulon de verrouillage (27) peut être comprimé dans le sens de l'état verrouillé.
